# EUROPÄISCHE PATENTSCHRIFT

(11) **EP 2 298 582 B1**
(45) Veröffentlichungstag und Bekanntmachung des Hinweises auf die Patenterteilung: **16.11.2011**
(21) Anmeldenummer: 09012049.4
(22) Anmeldetag: 22.09.2009
(51) Int. Cl.: B60H 1/22

(54) **Elektrische Heizvorrichtung und Verfahren zu deren Herstellung**
Electric heating device and method for its production
Dispositif de chauffage électrique et son procédé de fabrication

(43) Veröffentlichungstag der Anmeldung: 23.03.2011
(73) Patentinhaber: Eberspächer catem GmbH & Co. KG, 76863 Herxheim (DE)
(72) Erfinder: Niederer, Michael, 76889 Kapellen Drusweiler (DE); Bohlender, Frank, 76870 Kandel (DE)
(74) Vertreter: Grünecker, Kinkeldey, Stockmair & Schwanhäusser

(56) Entgegenhaltungen:
- EP-A- 1 432 287
- EP-A- 1 564 503
- EP-A- 1 571 325
- EP-A- 2 017 546
- DE-A1- 10 143 852
- DE-A1- 19 911 547

## Beschreibung

Die vorliegende Erfindung betrifft eine elektrische Heizvorrichtung und ein Verfahren zur Herstellung einer solchen.

Eine gattungsgemäße elektrische Heizvorrichtung hat ein offenes Gehäuse, in dem ein Schichtaufbau mit wenigstens einem Radiatorelement, wenigstens einem wärmeabgebenden Element und wenigstens einem PTC-Element sowie wenigstens ein Federelement aufgenommen sind. Das Federelement ist in dem Gehäuse derart aufgenommen, dass es den Schichtaufbau unter Federvorspannung in dem Gehäuse hält. In dem Gehäuse sind des Weiteren mehrere elektrisch mit dem wenigstens einen PTC-Element verbundenen Kontakte isoliert gehalten. Diese Kontakte sind üblicherweise als Blechbänder ausgebildet und sich in Längsrichtung des Schichtaufbaus als Teil desselben erstreckend vorgesehen. Das Gehäuse ist ein offenes Gehäuse, d.h. bildet sich üblicherweise gegenüberliegende Gehäuseöffnungen aus, zwischen denen der Schichtaufbau vorgesehen ist.

Ein solcher Zuheizer zur Klimatisierung des Innenraums eines Kraftfahrzeuges ist beispielsweise aus der EP-A1-1 564 503 bekannt. Der die Radiatorelemente und die dabei abgebenden Elemente umfassende Schichtaufbau wird üblicherweise auch als Heizblock bezeichnet. Das Federelement befindet sich im Wesentlichen auf Höhe des Heizblocks, d.h. zwischen denen durch die durch den Heizblock gebildete Ober- und Unterseiten desselben, so dass die durch das Federelement bewirkte Federkraft im Wesentlichen mittig in den Heizblock eingeleitet wird.

Der Heizblock der gattungsgemäßen elektrischen Heizvorrichtung umfasst üblicherweise mehrere parallele Lagen von wärmeabgebenden und wärmeerzeugenden Elementen. Die wärmeerzeugenden Elemente des Heizblocks umfassen üblicherweise mehrere in einer Ebene übereinander vorgesehene PTC-Heizelemente, die zwischen Leiterbahnen, die üblicherweise durch Blechbänder gebildet sind, angeordnet sind. Diese Leiterbahnen sind mit unterschiedlicher Polarität bestromt. Die PTC-Elemente können mit diesen Leiterbahnen verklebt sein. Auch ist es möglich, die Leiterbahnen unter Vorspannung gegen die PTC-Heizelemente anzulegen. In jedem Fall ist darauf zu achten, dass zur Auskupplung der von den PTC-Heizelementen erzeugten Wärme und zur Einkupplung von Strom eine gute Kontaktierung zwischen den Leiterbahnen und den PTC-Heizelementen besteht.

Es können ein oder mehrere wärmeerzeugende Elemente als Teil des Heizblocks vorgesehen sein. Die von den wärmeerzeugenden Elementen erzeugte Wärme wird über wärmeabgebende Elemente an das zu erwärmende Medium, d.h. die Luft abgegeben. Diese durchströmt das Gehäuse durch die beiden Rahmenöffnungen, die zwischen sich den ebenen Heizblock aufnehmen. Die Rahmenöffnungen liegen dabei üblicherweise parallel zueinander an gegenüberliegenden Seiten eines im Wesentlichen flachen, rahmenförmigen Gehäuses. Im Hinblick auf eine möglichst kostengünstige Herstellung der elektrischen Heizvorrichtung werden die wärmeabgebenden Elemente in der Regel aus mäandrierend gebogenen Blechstreifen gebildet, die Wellrippen ausbilden. Diese Wellrippen liegen ein- oder beidseitig an wärmeabgebenden Elementen an. Dementsprechend umfasst der Heizblock mehrere Lagen von wärmeabgebenden und wärmeerzeugenden Elementen, wobei auch im Hinblick auf die Wärmeauskopplung darauf zu achten ist, dass die wärmeabgebenden Elemente gut an den wärmeerzeugenden Elementen anliegen. Auch hierzu können die wärmeabgebenden Elemente mit den wärmeerzeugenden Elementen fest verbunden und/oder durch wenigstens ein in dem Gehäuse aufgenommenes Federelement unter Vorspannung angelegt werden.

Statt durch ein mäandrierendes Blechband kann das wärmeabgebende Element auch durch ein stranggepresstes Aluminiumprofil gebildet sein, welches Stege ausbildet, die sich im Wesentlichen rechtwinklig zu den Lagen des Schichtaufbaus, umfassend die wärmeabgebenden und die wärmeerzeugenden Elemente erstrecken. In einem solchen Fall kann die Leiterbahn, d.h. die in der Regel ebene Anlagefläche für das PTC-Heizelement durch die Außenfläche eines solchen stranggepressten Aluminiumprofils gebildet werden. Bei beiden Alternativen Wellrippenelement bzw. Strangpressprofil sind die Anlagefläche für die PTC-Heizelemente elektrisch leitend ausgestaltet und elektrisch mit in dem Gehäuse üblicherweise isoliert voneinander gehaltenen Kontakten verbunden. In dem erstgenannten Fall werden die Kontakte in der Regel durch die freiliegenden Enden der Blechbänder gebildet.

Der geschichtete Heizblock aus parallelen wärmeabgebenden und wärmeerzeugenden Elementen, gegebenenfalls unter Hinzufügung eines oder mehrerer sich parallel hierzu erstreckender Federelemente ist vorzugsweise in einem Gehäuse mit einem U-förmigen Querschnitt gehalten. Bei der Beaufschlagung des Schichtaufbaus mit einer Feder ist der Rahmen so zu dimensionieren, dass die Federkraft dauerhaft auch bei den erhöhten Temperaturen halten kann. Dabei ist zu beachten, dass der isolierende Rahmen heutzutage nicht zuletzt aus ökonomischen Gründen als Kunststoffspritzgussteil hergestellt wird. Übliche Gehäuse bestehen heutzutage aus einem Gehäuseunterteil und einem Gehäuseoberteil. Das Gehäuseunterteil bildet hierbei eine Aufnahme für die einzelnen Elemente des Heizblocks sowie erforderlichenfalls des Federelementes aus. In diesem Gehäuseunterteil werden die einzelnen Elemente des Heizblocks angeordnet. Danach wird der Heizblock durch Fügen von Gehäuseoberteil und Gehäuseunterteil in dem Gehäuse eingeschlossen. Hierzu können Ränder, die die Rahmenöffnungen umgeben, den Heizblock teilweise überdecken, so dass der Heizblock zwischen den Rahmenöffnungen eingeschlossen und in dem Gehäuse gehalten ist. Die beiden Gehäuseteile werden danach miteinander verbunden, beispielsweise über eine Rastverbindung.

Des Weiteren soll im Hinblick auf eine kostengünstige Herstellung der elektrischen Heizvorrichtung das Gehäuse selbst möglichst einfach hergestellt werden können. Dabei sind jedoch auch die besonderen Anforderungen zu beachten, die der Einbau von einem oder mehreren Federelementen in das Gehäuse in der Praxis stellt, wenn beim Fügen der Gehäuseteile der Heizblock bereits in dem Rahmen unter Vorspannung gesetzt ist, so dass das Fügen gegen diese Vorspannung zu erfolgen hat.

Mit der EP-A1-1 432 287 ist bereits von der vorliegenden Anmelderin ein Lösungsvorschlag gemacht worden, bei dem sämtliche, den Heizblock bildenden Teile zunächst in das Gehäuse eingesetzt werden. Das Gehäuse dann verschlossen und danach von der Stirnseite des Gehäuses durch einen Kanal ein Federelement eingebracht wird, durch welches die Lagen des Heizblocks unter Vorspannung dieser Feder gegeneinander angelegt werden. Mit diesem vorbekannten Lösungsvorschlag können die Lagen des Heizblocks zunächst vorspannungsfrei in dem Gehäuse integriert werden.

Bei dem aus der EP-A1-1 564 503 bekannten Verfahren zur Herstellung der elektrischen Heizvorrichtung werden die den Heizblock bildenden Elemente in ein Gehäuseteil eingebracht. Des Weiteren wird das Federelement in das Gehäuseteil eingebracht. Danach erfolgt das Schließen des Gehäuses durch Aufbringen eines weiteren Gehäuseteils auf das erste Gehäuseteil. Nach der Lehre der EP-A1-1 564 503 wird erst beim Schließen des Gehäuses das Federelement unter Vorspannung gesetzt, und zwar durch Verdrängerelemente, die an dem weiteren Gehäuseteil angeformt sind und welche das Federelement unter Vorspannung setzen. Dieses Verdrängerelement bildet eine Schrägfläche aus, an welcher das Federelement mit seinem freien oberen Schenkel vorbeigleitet und hierbei in Richtung auf den Heizblock um ein Lager innerhalb des ersten Gehäuseteils verschwenkt und schließlich zur Erzeugung einer Spannkraft vorgespannt wird.

Dieser vorbekannte Vorschlag führt zu einer gewissen Erleichterung bei der Montage, die jedoch voraussetzt, dass die Elemente des Heizblocks wie auch das Federelement in der richtigen Positionierung in das Gehäuseunterteil eingebracht werden. Des Weiteren hat das bei dieser elektrischen Heizvorrichtung verwirklichte Gehäuse verschiedene Schrägflächen, die für das Verspannen und Einschließen des Federelementes beim Fügen der Gehäuseteile erforderlich sind. Darüber hinaus muss das Federelement relativ aufwändig ausgebildet sein, damit es der gestellten Aufgabe gerecht wird. Eine der Maßgabe von EP-A1-1 564 503 im Wesentlichen folgende Weiterbildung ist aus der EP-A1-2 017 546 bekannt. Auch bei diesem Stand der Technik werden zunächst die Lagen des Schichtaufbaus spannungsfrei in das Gehäuse eingebracht. Das Federelement wird indessen oberhalb der den Schichtaufbau umfassenden Ebene positioniert und beim Schließen des Gehäuses durch Fügen von Gehäuseoberteil und Gehäuseunterteil in die den Schichtaufbau enthaltene Ebene verdrängt. Dementsprechend wird das Federelement beim Schließen des Gehäuses zum Einschluss des Heizblocks in seiner Einbaulage verbracht und unter Vorspannung gesetzt.

DE 19911 547 offenbart eine Vorrichtung nach dem Oberbegriff des Anspruchs 1.

Wie die obigen beispielhaft genannten früheren Vorschläge belegen, bemüht sich die Fachwelt ständig um Lösungsvorschläge, die eine im Wesentlichen spannungsfreie Montage der elektrischen Heizvorrichtung ermöglichen. Insbesondere sollen die den Schichtaufbau bildenden Elemente zunächst spannungsfrei in ein Gehäuseteil eingesetzt werden. Das Vorspannen der Feder erfolgt in einem letzten Verfahrensschritt, d.h. nach dem Schließen des Gehäuses, vorzugsweise in einer Weise, dass die in dem Gehäuse aufgenommenen Elemente der Heizvorrichtung nicht durch die sich entwickelnde Feder aus dem Gehäuse herausgedrängt werden können.

Der vorliegenden Erfindung liegt das Problem zugrunde, eine elektrische Heizvorrichtung der eingangs genannten Art anzugeben, deren Schichtaufbau leichter in dem Gehäuse montiert werden kann. Darüber hinaus liegt der Erfindung das Problem zugrunde, ein einfaches Verfahren zur Herstellung einer elektrischen Heizvorrichtung der eingangs genannten Art anzugeben.

Zur Lösung des vorrichtungsmäßigen Aspekts wird mit der vorliegenden Erfindung eine elektrische Heizvorrichtung mit den Merkmalen von Anspruch 1 vorgeschlagen. Diese unterscheidet sich dadurch von dem gattungsbildenden Stand der Technik, dass das Federelement benachbart zu einem Federgegenelement vorgesehen ist. Das Federelement und das Federgegenelement wirken zusammen derart, dass an dem Federelement ausgebildete Federzungen zur Anlage gegen das Federelement gebracht werden können. Des Weiteren sind das Federelement und das Federgegenelement verschieblich zueinander vorgesehen. Schließlich weist das Federelement für die Aufnahme der Federzungen angepasste Aufnahmen auf.

Die erfindungsgemäße Weiterbildung bietet die Möglichkeit, zunächst das Federelement zusammen mit dem Federgegenelement im Wesentlichen spannungsfrei in das Gehäuse zusammen mit dem Schichtaufbau einzubauen. Bei diesem spannungsfreien Schichtaufbau befinden sich die Federzungen in den hierzu angepasst ausgebildeten Aufnahmen des Federgegenelementes. Das Federelement und das Federgegenelement liegen dabei üblicherweise parallel zu den Lagen des Schichtaufbaus und relativ dicht nebeneinander. Nach Einbau sämtlicher Elemente des Schichtaufbaus und des wenigstens einen Federelementes mit dem zugeordneten Federgegenelement wird das Gehäuse geschlossen. Danach erfolgt eine Relativbewegung zwischen dem Federelement und dem Federgegenelement. Das Federelement wird dabei vorzugsweise bewegt gegenüber einem ortsfest an dem Gehäuse gehaltenen oder durch dieses selbst ausgeformten Federgegenelement. Bei dieser Bewegung gleiten die Federzungen gegen den Rand der Aufnahmen. Die Federzungen haben vorzugsweise eine insofern rampenförmige Ausgestaltung, so dass die Federzungen bei fortschreitender Schiebebewegung zu einem Herausheben des Federelementes relativ zu dem Federgegenelement führen. Im Rahmen dieser Bewegung rechtwinklig zu den Schichten des Schichtaufbaus wird schließlich eine Federvorspannung aufgebaut, durch welche der Schichtaufbau in einer Montageendlage unter hinreichender Federvorspannung gesetzt ist.

Bei der erfindungsgemäßen elektrischen Heizvorrichtung sind danach die Ausnehmungen und die Federzungen derart aufeinander abgestimmt, dass durch Relativbewegung von Federelement und Federgegenelement in einer Richtung parallel zu den Schichten des Schichtaufbaus der Abstand zwischen dem Federelement und dem Federgegenelement in einer Richtung quer zu den Schichten des Schichtaufbaus durch die aus der Ausnehmung herausgehobene Federzungen vergrößert wird.

Anspruch 1 bestimmt die erfindungsgemäße Heizvorrichtung mit einer Feder, welche mehrere Federzungen umfasst. Heutzutage sind lediglich entsprechende mit mehreren Federzungen versehene Federelemente bekannt. Die vorliegende Erfindung will insbesondere eine elektrische Heizvorrichtung mit hoher Wärmeleistung weiterbilden. Insofern wird davon ausgegangen, dass das Federelement grundsätzlich mehrere Federzungen aufweist, die über die gesamte Länge (Erstreckung parallel zu den Lagen des Schichtaufbaus) entlang des Federelementes verteilt vorgesehen sind. Es ist aber nicht auszuschließen, dass die elektrische Heizvorrichtung lediglich eine Federzunge sowie ein eine einzige, auf die Federzunge angepasst ausgebildete Aufnahme aufweisendes Federgegenelement umfasst. Insofern ist die in Anspruch 1 gewählte plurale Form für den Regelfall einer elektrischen Heizvorrichtung zu lesen, ohne dass damit zum Ausdruck gebracht werden soll, dass ein Federelement mit lediglich einer Federzunge außerhalb des Schutzbereiches liegt. Mit diesem Hinweis sollen solche, sehr kleinen elektrischen Heizvorrichtungen mit geringer elektrischer Leistung ausdrücklich in den Schutzbereich einbezogen sein.

Gemäß einer bevorzugten Weiterbildung ist das Federelement als Gitterstruktur ausgebildet, die mehrere hintereinander vorgesehene Ausnehmungen aufweist. In Längsrichtung hintereinander weist das Federelement eine Vielzahl von Federzungen auf. Die Federzungen und die Gitterstruktur sind einander angepasst ausgebildet, so dass die Federzungen in einer ungespannten Montageausgangslage jeweils in einer Ausnehmung der Gitterstruktur aufgenommen sind. In der Montageendlage, in der der Schichtaufbau durch Relativbewegung zwischen dem Federelement und dem Federgegenelement unter Federvorspannung gesetzt worden ist, stützen sich die Federzungen üblicherweise an Stegen des Federgegenelementes ab, die zwischen den Ausnehmungen vorgesehen sind. Mit dieser Ausgestaltung lässt sich der Schichtaufbau im Wesentlichen über seine gesamte Länge zuverlässig unter Federvorspannung setzen, um eine hinreichende Kontaktierung der PTC-Heizelemente mit den zugeordneten elektrischen Kontakten zu erreichen. Die Grundform der vorstehend vorgestellten bevorzugten Ausgestaltung hat lediglich eine Reihe von Federzungen mit zugeordneter Gitterstruktur. Es ist indes denkbar, in Höhenrichtung des Schichtaufbaus zwei oder mehr Reihen an Federzungen vorzusehen.

Gemäß einer weiteren bevorzugten Ausgestaltung der vorliegenden Erfindung sind die Federzungen durch Stanzen und Biegen aus der Ebene eines Federblechs ausgebildet, und zwar in Form von Vorsprüngen. Diese Vorsprünge haben üblicherweise eine die zugeordnete Oberfläche des Federblechs konvex überragende Ausgestaltung. Durch Stanzen ist ein Ende der Federzunge in deren Längsrichtung freigeschnitten, d.h., gegenüber dem Material des Federblechs abgetrennt. Das andere Ende ist üblicherweise einteilig mit dem Federblech verbunden. Bei der besagten bevorzugten Ausgestaltung ist das freigeschnittene Ende der Federzunge in der ungespannten Montageausgangslage auf Höhe eines der Stege vorgesehen. Dabei kann das freigeschnittene Ende auf dem Steg anliegen. Es befindet sich aber in jedem Fall auf Höhe des Steges, d.h. überragt in Längsrichtung des Federblechs den Steg.

Gemäß einer bevorzugten Weiterbildung der vorliegenden Erfindung ist ein Ende des länglichen Federelementes durch Abtrennen eines Endlosmaterials des stanz- und biegebearbeiteten Federblechs an einer Stelle gebildet, an der die Federzunge aus der Ebene des Federblechs herausragt. Das Abtrennen erfolgt dabei in der Regel im Wesentlichen in der Mitte der herausgebogenen Federzunge. Diese in etwa mittig abgeteilte Federzunge bildet eine Haltelasche, die mit ihrem freien Ende jedenfalls in der Montageendstellung mit dem Federgegenelement arretierend zusammenwirkt, d.h. in eine davon ausgeformte Ausnehmung eingreift. Selbst wenn das Federelement durch Verschiebebewegung und Zusammenwirken mit den übrigen Federzungen gegenüber dem Federgegenelement herausgehoben ist, greift die so gebildete Haltelasche in die zugeordneten Ausnehmung. Die Haltelasche wirkt dementsprechend als Anschlag, wenn das Federelement relativ zu dem Gegenelement in einer Richtung bewegt wird, bei welcher die freigeschnittenen Enden der Federzungen über den Rand der zugeordneten Ausnehmung vorbeigleiten, und verhindert das Zurückgleiten in die Montageausgangslage.

Die zuvor diskutierte Ausgestaltung bietet den Vorteil, dass das Federelement als Endlosmaterial durch Stanzen und Biegen hergestellt werden kann. Durch Schneiden eines solchen Endlosmaterials an einer vorbestimmten Stelle wird aus einer endseitig des Federelementes vorgesehenen Federzunge eine Haltelasche, die das Maß der Relativbewegung zwischen dem Federelement und dem Federgegenelement bestimmt und eine Endlage der Verschiebebewegung festlegt.

Gemäß einer weiteren bevorzugten Ausgestaltung ist an dem Federelement wenigstens eine Eintrittsöffnung für ein Spannwerkzeug vorgesehen. Diese Eingriffsöffnung zeigt sich nach der Montage des Gehäuses und in der Montageausgangslage an einem Fenster, welches an dem Gehäuse ausgespart ist und durch welche das Spannwerkzeug in die Eingriffsöffnung eingebracht werden kann. Üblicherweise befindet sich die Eingriffsöffnung randnah zu einem Seitenholm des Gehäuses, da dort eine gewisse Schwächung des Gehäusematerials üblicherweise nicht mit einer erheblichen Durchbiegung des Holms einhergeht, die durch die Federkraft verursacht werden kann.

Aufgrund der bevorzugten Ausgestaltung des Federblechs als aus einem Endlosmaterial herausgeschnittenes Längenstück werden üblicherweise eine dem Stanzraster entsprechende Anzahl von Eingriffsöffnungen an dem Federelement vorgesehen sein. Für das Spannen der Feder durch Relativbewegung zwischen Federelement und Federgegenelement sind jedoch lediglich wenige, gegebenenfalls nur eine der Eingriffsöffnungen von Nutzen.

Gemäß einer bevorzugten Weiterbildung, die auch zu einer gewissen thermischen Isolation zwischen dem Federelement und dem Heizblock führt und insofern einer frühen thermischen Ermüdung des Federelementes entgegenwirkt, befindet sich das Federelement zwischen einem Gehäuselängsholm und dem Federgegenelement. Diese thermische Isolation wird bereits dann erreicht, wenn das Federgegenelement über seine Längserstreckung nur einige wenige Ausnehmungen aufweist. Das Federgegenelement wird üblicherweise aus einem thermisch schlecht leitenden Kunststoff ausgebildet sein. Eine thermische Isolation nach Art von Kühlrippen ergibt sich insbesondere dann, wenn das Federgegenelement eine relativ dünnmaschige Gitterstruktur ausbildet, d.h. lediglich die Stege sowie relativ dünnwandige, diese verbindende Längsstege vorgesehen sind, wodurch die insgesamt zur Wärmeleitung zur Verfügung stehende Fläche reduziert ist.

Um Fehler bei der Montage der erfindungsgemäßen Heizvorrichtung zu vermeiden, weist das Federgegenelement vorzugsweise einen das Federelement überragenden Positionssteg auf. Korrespondierend zu der Abmessung dieses Positionssteges ist an dem Gehäuse eine Positionieraussparung ausgebildet. Der Positionssteg und die Positionieraussparung sind vorzugsweise derart ausgebildet, dass die Einheit aus Federelement und Federgegenelement nicht in jeder beliebigen Ausrichtung in das Gehäuse eingebaut werden kann. Selbstverständlich können mehrere Positionsstege und mehrere hierzu angepasste Positionieraussparungen vorgesehen sein. Durch entsprechende Schlüssel-Loch-Ausgestaltungen zwischen dem Federgegenelement und dem Gehäuse kann für jedes der in dem Gehäuse vorgesehenen Einheiten aus Federelement und Federgegenelement eine eindeutige Anordnung und Ausrichtung vorgegeben sein. Die Anordnung der Positionsstege und der Positionieraussparungen kann dabei so gewählt sein, dass jede der Einheiten aus Federelement und Federgegenelement lediglich an einer vorbestimmten Stelle angeordnet werden kann. Ein fehlerhafter Einbau der Einheiten wird damit sicher ausgeschlossen.

Im Hinblick auf eine gute Verschieblichkeit von Federelement und Federgegenelement weist letzteres vorzugsweise wenigstens einen Auflageabschnitt für das Federelement auf. Auf diesem Auflageabschnitt gleitet das Federelement jedenfalls in seiner unverspannten Montageausgangslage entlang. Es ist darauf zu achten, dass sich gegenüberliegende und miteinander zusammenwirkende Gleitflächen von Federelement und Federgegenelement möglichst glatt sind.

Im Hinblick auf eine gute Verformbarkeit der Federzungen hat es sich als vorteilhaft erwiesen, die Oberflächen der Stege in einer Richtung quer zu den Lagen des Schichtaufbaus mit Abstand zu einer Ebene vorzusehen, in der sich der Auflageabschnitt erstreckt. Dabei wird davon ausgegangen, dass die Stege sämtlich in einer Ebene liegen, d.h. jedenfalls die mit den Federzungen zusammenwirkenden Stegkanten des Federgegenelementes höhengleich vorgesehen sind. Eine solche Ausgestaltung ist indes nicht zwingend. Die Kanten können auch auf unterschiedlichen Ebenen vorgesehen sein. Durch individuelle Anpassung der Kanten bzw. der Stege und der zugeordneten Federzungen kann das Maß der Federkraft, welche an einer vorbestimmten Stelle bzw. an einem vorbestimmten Bereich innerhalb des Federelementes erzeugt wird, beeinflusst werden.

Gemäß einer weiteren bevorzugten Ausgestaltung der vorliegenden Erfindung, die zu einer vereinfachten Herstellung der elektrischen Heizvorrichtung führt, ist das Gehäuse aus zwei identisch ausgebildeten Gehäuseteilen zusammengesetzt. Das Gehäuseunterteil ist danach identisch zu dem Gehäuseoberteil ausgebildet.

Im Hinblick auf das verfahrensmäßige Problem der vorliegenden Erfindung wird mit der vorliegenden Erfindung vorgeschlagen, den Schichtaufbau und das wenigstens eine Federelement zunächst in das Gehäuse einzusetzen. Das Verspannen des Schichtaufbaus erfolgt in der Regel nach dem Verschließen des Gehäuses durch Verschieben des Federelementes in einer Richtung im Wesentlichen parallel zu den Ebenen des Schichtaufbaus.

Das Federelement kann dabei Federzungen aufweisen, die beispielsweise in der Montageausgangsstellung in korrespondierend hierzu an dem Gehäuse ausgeformten Ausnehmungen in Eingriff sind. Es ist nicht erforderlich, ein separates Federgegenelement vorzusehen. Das Federgegenelement kann dementsprechend auch als Bestandteil des Gehäuses ausgeformt sein. Bei einer solchen Ausgestaltung kann aber nicht die bevorzugte thermische Isolation zwischen dem Federelement und dem Schichtaufbau erzielt werden, die erst mit einem separaten Federgegenelement möglich ist, welches zwischen dem Schichtaufbau und dem Federelement vorgesehen ist. Das Federelement kann in Längsrichtung und/oder in Querrichtung parallel zu den Lagen des Schichtaufbaus verschoben werden.

Nach einer bevorzugten Verfahrensführung wird beim Verschieben des Federelementes eine an einer Federzunge des Federelementes ausgebildete Gleitrampe, die beim Einbau des Federelementes in das Gehäuse in einer Ausnehmung eines Federelementes aufgenommen ist, an einem Rand der Ausnehmung vorbeigleiten und hierbei das Federelement vorspannen.

Weitere Einzelheiten und Vorteile der vorliegenden Erfindung ergeben sich aus der folgenden Beschreibung eines Ausführungsbeispiels in Verbindung mit der Zeichnung. Mit dieser Zeichnung:
- Fig. 1: eine Querschnittsansicht des Ausführungsbeispiels der Montageaus- gangslage;
- Fig. 2: die Einzelheit II gemäß Fig. 1 in vergrößerter Darstellung;
- Fig. 3: eine Querschnittsansicht des Ausführungsbeispiels der Montageendlage;
- Fig. 4: die Einzelheit II gemäß Fig. 1 in vergrößerter Darstellung;
- Fig. 5: eine perspektivische Seitenansicht des Federelementes des gezeigten Ausführungsbeispiels;
- Fig. 6: eine perspektivische Seitenansicht des Federgegenelementes des gezeig- ten Ausführungsbeispiels;
- Fig. 7: eine perspektivische Seitenansicht von Federelement und Federgegen- element;
- Fig. 8: die in Fig. 7 gezeigte Einzelheit VIII in vergrößerter Darstellung;
- Fig. 9: das Ausführungsbeispiel in einer perspektivischen Seitenansicht bei ge- öffnetem Gehäuse;
- Fig. 10: die Darstellung gemäß Fig. 9 bei geschlossenem Gehäuse;
- Fig. 11A bis 11C: die in Fig. 10 eingezeichnete Einzelheit in vergrößerter Darstellung bei teilweise weggeschnittenem Gehäuse in verschiedenen Phasen beim Verspannen der Federeinrichtung.

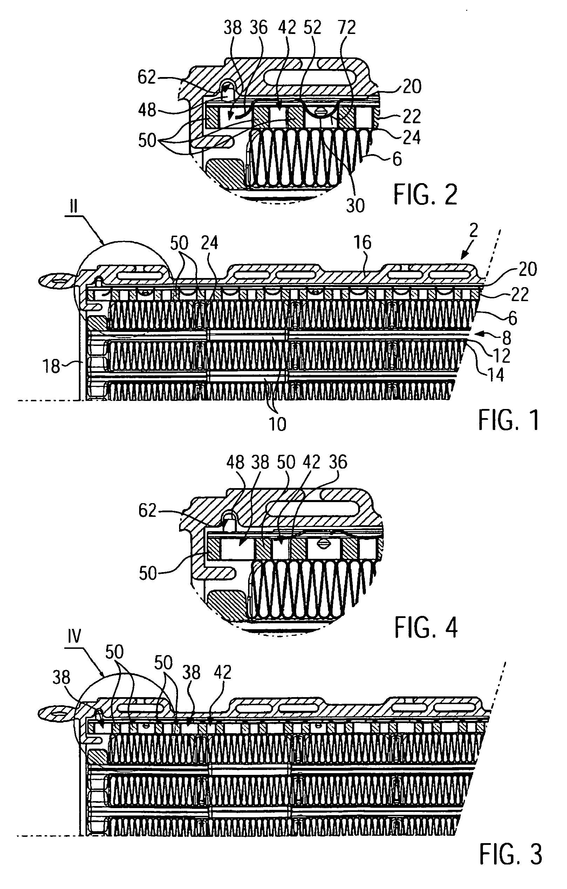

Die Fig. 1 und 3 zeigen eine Längsschnittansicht des Ausführungsbeispiels mit einem Gehäuse 2, in dem ein Schichtaufbau 4 aufgenommen ist. Bei dem gezeigten Ausführungsbeispiel besteht der Schichtaufbau 4 aus mehreren sich parallel erstreckenden Lagen von Radiatorelementen 6, die aus Blechband, welches mäandrierend gebogen ist, geformt sind. Zwischen den einzelnen Radiatorelementen 6 befinden sich wärmeabgebende Elemente 8. Diese wärmeabgebenden Elemente 8 umfassen mehrere in einer Ebene hintereinander vorgesehene PTC-Heizelemente 10, die zwischen Blechbändern 12 vorgesehen sind. Die Blechbänder 12 dienen der Bestromung der PTC-Heizelemente 10. Vorliegend ist die elektrische Heizvorrichtung als Hochvolt-Heizvorrichtung ausgebildet. Die jeweiligen an den Öffnungen des Gehäuses 2 freiliegenden Radiatorelemente 6 sind dementsprechend von den elektrisch leitenden Blechbändern 12 elektrisch isoliert vorgesehen. Hierzu ist zwischen den Radiatorelementen 6 und den Blechbändern 12 jeweils eine keramische Isolierschicht 14 vorgesehen.

Das Gehäuse 2 umfasst Längsholme 16 und Querholme 18, die vorliegend mit rechtwinkliger Erstreckung zueinander vorgesehen sind. Die Längsholme 16 erstrecken sich dabei parallel zu den Lagen des Schichtaufbaus 4.

Zwischen dem Längsholm 16 und dem äußeren Radiatorelement 6 befindet sich ein Federelement 20 und ein Federgegenelement 22. Das Federelement 20 liegt benachbart zu der Innenfläche des Längsholmes 16 und wirkt mit dieser Innenfläche zusammen. Das Federgegenelement 22 befindet sich zwischen dem äußeren Radiatorelement 6 und dem Federelement 20. Auf der dem äußeren Radiatorelement 6 zugewandten Innenfläche des Federgegenelementes ist ein Halteband 24 aus einem Blechstreifen vorgesehen, welches eine Anlagefläche für den äußeren Rand des äußeren Radiatorelementes 6 bildet.

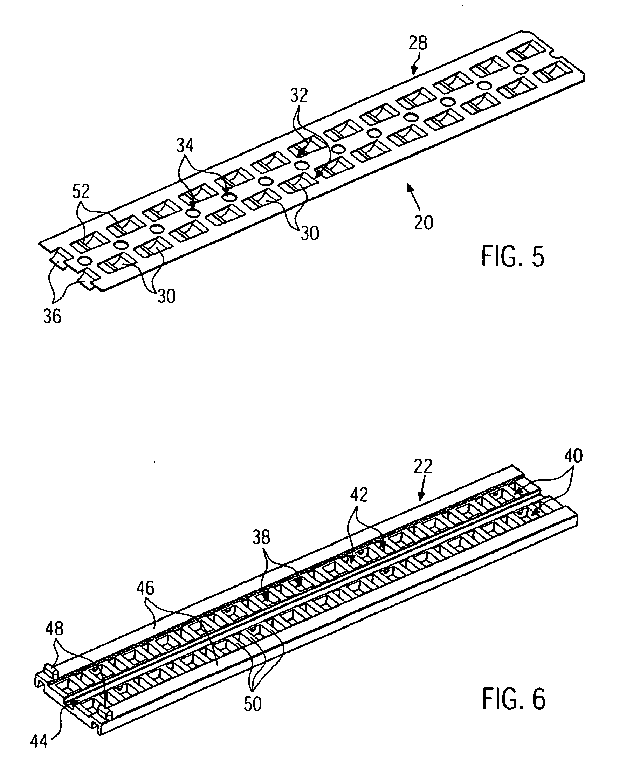

Wie insbesondere die Fig. 5 verdeutlicht, ist das Federelement 20 aus einem länglichen Blechstreifen 28 durch Stanzbearbeitung geformt. Im Rahmen dieser Stanzbearbeitung werden in konstanten Abschnitten Federzungen 30 aus dem Blechstreifen 28 freigeschnitten. Danach sind die Federzungen 30 lediglich einseitig mit dem Material des Blechstreifens 28 verbunden. Vorliegend sind zwei Reihen 32 von Federzungen 30 vorgesehen. In Längsrichtung des Federelementes 20 sind zwischen den beiden Reihen 32 gestanzte Eingriffsöffnungen 34 ausgebildet. Die Eingriffsöffnungen 34 befinden sich in einer Reihe in der Mitte des Federelementes 20.

An dem in Fig. 5 links gezeigten Ende wird die Ebene des Blechstreifens 28 in Richtung der Federzungen 30 durch eine Haltelasche 36 überragt. Bei dieser Haltelasche 36 handelt es sich um einen zunächst als Federzunge 30 ausgebildeten Vorsprung des Blechstreifens 28, der in etwa auf Höhe der höchsten Erhebung relativ zu dem Blechstreifen 28 durchtrennt wurde. An dieser Stelle wurde das Federelement 20 von einem das Federelement 22 bildenden Endlosmaterial abgetrennt.

Das in Fig. 6 gezeigte Federgegenelement 22 weist korrespondierend zu der Anzahl und Lage der Federzungen 30 an dem Federgegenelement 22 ausgesparte Aufnahmen 38 aus. Dementsprechend befinden sich zwei Reihen 40 von Aufnahmen 38 in paralleler Ausrichtung zueinander. Die Aufnahmen 38 sind derart ausgebildet, dass die die Blechstreifen 28 konvex überragenden Federzungen 30 im Wesentlichen in die Aufnahmen 38 passen (vgl. Fig. 2). Zwischen zwei Aufnahmen 38 befindet sich jeweils eine Ausnehmung 42, deren Abmessung in Längserstreckung des Federgegenelementes 22 wesentlich kleiner als die Abmessung der Aufnahme 38 ist. Zwischen den benachbarten Reihen 40 ist eine Nut 44 ausgespart, deren Grund tiefer als die Oberfläche des Federgegenelementes 22 im Bereich der Reihen 40 ist. An der Außenseite des Federgegenelementes 22 bildet dieses zwei Auflageabschnitte 46 aus, welche einseitig von einem Positionssteg 48 überragt sind, der sich an einem Ende des Federgegenelements 22 erhebt. Die Auflageabschnitte 46 überragen diejenige Ebene, in denen Stege 50 vorgesehen sind, die die Ausnehmungen 42 bzw. die Aufnahmen 38 voneinander trennen.

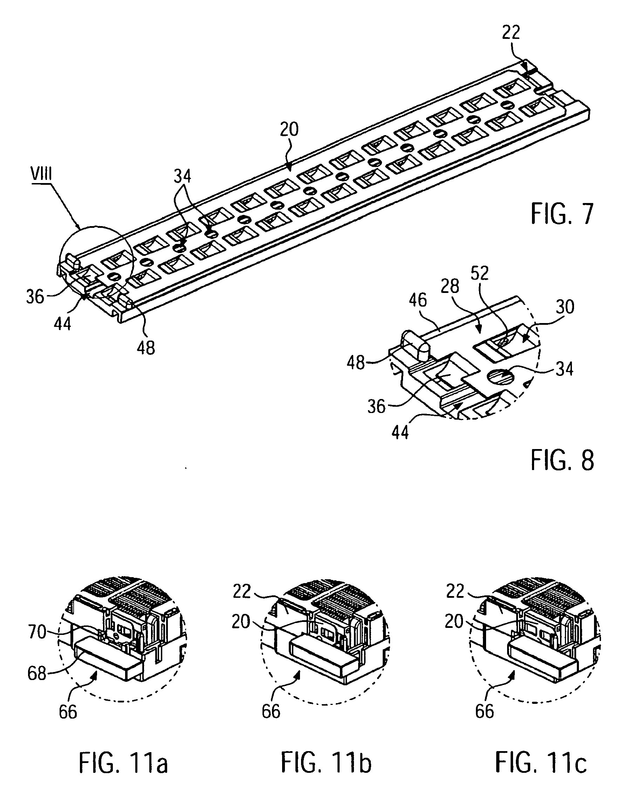

Nach der Vormontage der aus Federelement 20 und Federgegenelement 22 gebildeten Einheit liegt das Federelement 20 mit seiner von den Federzungen 30 überragten Randfläche auf den randseitigen Auflageabschnitten 46 des Federgegenelementes 22 an. Die Federzungen 30 befinden sich jeweils im Eingriff in einer der Aufnahmen 38. Durch die Nut 44 ist ein gewisser Abstand zwischen dem Blechstreifen 28 im Bereich der Eingriffsöffnungen 34 und dem Federgegenelement 22 geschaffen (vgl. Fig. 8). Die Haltelaschen 36 sind im Eingriff in der zugeordneten Aufnahme 38 (vgl. Fig. 2). Die freien Enden der Federzungen 30 hingegen befinden sich auf Höhe der zugeordneten Stege 50. Wie sich aus der Darstellung gemäß Fig. 2 ergibt, liegen die freien Enden, die in Fig. 2 mit Bezugszeichen 52 gekennzeichnet sind, in einer Richtung quer zu den Lagen des Schichtaufbaus auf der Außenseite und hinter dem zugeordneten Steg 50.

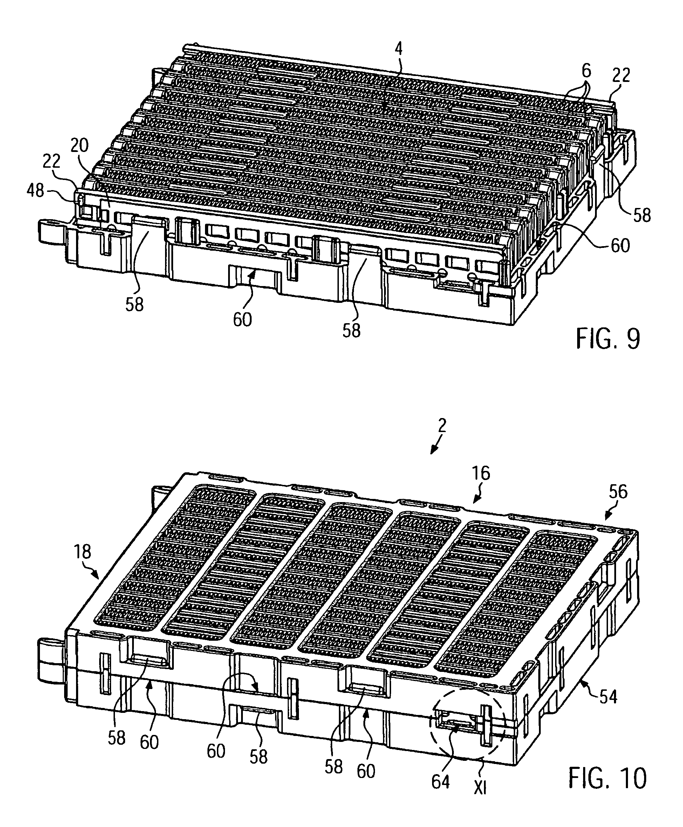

Fig. 9 zeigt ein mit den Lagen des Schichtaufbaus 4 und den jeweiligen randseitig vorgesehenen Einheiten aus Federelement und Federgegenelement 20, 22 aufgefülltes Gehäuseunterteil 54. Deutlich zu erkennen ist an der Vorderseite das nach außen gerichtete Federelement 20. Auf das so vorbereitete Gehäuseunterteil 54 wird das in Fig. 10 gezeigte Gehäuseoberteil 56 aufgesetzt. Das Gehäuse 2 ist nun geschlossen. Wie zu erkennen, sind Gehäuseoberteil und Gehäuseunterteil 54, 56 jeweils identisch ausgebildet. Die Gehäuseteile 54, 56 weisen jeweils an den breiten Flächen versetzt vorgesehene Rastfedern 58 und korrespondierend hierzu ausgebildete Rastnuten 60 aus, die zum Sichern einer Verschlusslage des Gehäuses 2 zusammenwirken. Nachdem das Gehäuse 2 verschlossen ist, liegen die Lagen des Schichtaufbaus 4, die Federelemente 20 und die Federgegenelemente 22 im Wesentlichen spielfrei, jedoch ohne substanzielle Spannung gegeneinander und zwischen den sich gegenüberliegenden Innenflächen der Längsholme 16 an. Wie die Figuren 2 und 4 verdeutlichen, hat das Gehäuse 2 im Eckbereich der Längsholme 16 eine Positionieraussparung 62, in welche der Positionssteg 48 eingreifen muss. Andernfalls kann das Gehäuse 2 nicht in der gewünschten Weise mit notwendigen Elementen des Schichtaufbaus sowie mit beiden Federelementen und -gegenelementen 20, 22 gefüllt werden. Insofern führt das Zusammenwirken von Positionssteg 48 und Positionieraussparung 42 dazu, dass die Einheit aus Federelement und Federgegenelement nicht in falscher Ausrichtung in das Gehäuse 2 eingebaut werden kann.

Die Fig. 9 und 10 zeigen ein an dem Gehäuse 2 ausgespartes Fenster 64, welches zumindest eines, vorzugsweise zwei der Eingriffsöffnungen 34 bei geschlossenem Gehäuse freigibt. Das Fenster 64 ist derart ausgestaltet, dass die Eingriffsöffnungen 34 durch ein in den Fig. 11A bis 11C gezeigtes Spannwerkzeug 66 gegriffen werden können. Das Spannwerkzeug 66 hat hierzu einen von einem Griffstück 68 abragenden Zapfen 70, der in die Eingriffsöffnung 34 eingebracht werden kann. Die Nut 44 erlaubt dabei, dass der Zapfen 40 den Blechstreifen 28 durchdringt, so dass der Zapfen 70 nicht beim Spannen der Feder des Federelementes 20 unbeabsichtigt aus der Eingriffsöffnung 34 herausrutscht. Ein Werkzeugsatz zum Vorspannen des Schichtaufbaus umfasst üblicherweise zwei Spannwerkzeuge 66, die zeitgleich seitlich an dem Gehäuse 2 angeordnet werden, mit den jeweiligen Zapfen 70 in der korrespondierenden Eingriffsöffnung 34. Es versteht sich von selbst, dass die Eingriffsöffnung 34 unterschiedliche geometrische Ausgestaltungen aufweisen kann. Vorliegend wurde eine runde Eingriffsöffnung 34 verdeutlich. Die Eingriffsöffnung 34 kann genauso gut oval oder polygonal sein.

Durch Längsverschieben der beiden Spannwerkzeuge 66 wird das Federelement 20 relativ zu dem Federgegenelement verschoben. Bei dieser Verschiebebewegung wird das freie, den Steg 50 zunächst überragende Ende 52 jeder Federzunge 30 zunächst an der der Federzunge 30 zugeordnete Aufnahme 38 vorbeigeführt. Dabei gleitet eine benachbart zu dem festen Ende einer Federzunge 30 vorgesehene und durch die jeweilige Federzunge 30 ausgebildete Gleitrampe 72 entlang einer Kante des durch die in den Fig. 2, 3 jeweils rechten Steges 50 zu einer Aufnahme 38. Das Federelement 20 wird dementsprechend relativ zu dem Federgegenelement 22 beabstandet und in Richtung auf den zugeordneten Längsholm 16 nach außen gedrängt und mit Vorspannung zwischen diesem und dem Federgegenelement 22 verspannt. Dabei werden sämtliche Federzungen 30 elastisch umbogen und federvorgespannt. Der Schichtaufbau wird so unter Federvorspannung gesetzt. Die Verschiebebewegung endet, wenn die nach außen konvex gekrümmten Federzungen 30 in die Ausnehmungen 42 eingreifen. Die Haltelasche 36 greift dabei in die randseitig erste Ausnehmung 42 ein. Das freie Ende der Haltelasche 36 liegt dabei tiefer als die Ebene, in der die Oberfläche der Stege 50 liegen. So wird verhindert, dass das Federelement 20 von dieser Montageendlage unbeabsichtigt in die in Fig. 1 bzw. 2 gezeigte Montageausgangslage zurückgesetzt wird. Das Federelement 20 kann auch nicht über die Montageendlage hinaus verschoben werden, da das andere, der Haltelasche 36 entfernte Ende des Federelementes 20 in der Montageendlage an bzw. nahe der Innenfläche des Querholmes 18 liegt, durch den eine weitere Verschiebung des Federelementes 20 verhindert wird.

Die vorliegende Erfindung ist nicht auf das gezeigte Ausführungsbeispiel beschränkt. Es ist ohne Weiteres möglich, den Schichtaufbau 4 durch lediglich ein Federelement 20 mit zugeordnetem Federgegenelement 22 zu verspannen. Im Bedarfsfall können nicht nur randseitig, sondern auch innerhalb des Schichtaufbaus 4 Federelemente mit zugeordneten Federgegenelementen 20, 22 vorgesehen sein. Zum Verspannen können die Federelemente das Gehäuse 2 ebenso gut über den Querholm 18 hinaus überragen. Auch können die Federelemente 22 einen Positioniervorsprung aufweisen, der den Schichtaufbau 4 ober- bzw. unterseitig (d.h. in Strömungsrichtung des den Heizblock durchströmenden Mediums) überragt.

### Bezugszeichenliste

- 2: Gehäuse
- 4: Schichtaufbau
- 6: Radiatorelement
- 8: wärmeabgebendes Element
- 10: PTC-Heizelement
- 12: Blechband
- 14: Isolierschicht
- 16: Längsholm
- 18: Querholm
- 20: Federelement
- 22: Federgegenelement
- 24: Halteband
- 28: Blechstreifen
- 30: Federzunge
- 32: Reihe (Federzungen)
- 34: Eingriffsöffnung
- 36: Haltelasche
- 38: Aufnahme
- 40: Reihe (Aufnahmen)
- 42: Ausnehmung
- 44: Nut
- 46: Auflageabschnitt
- 48: Positionssteg
- 50: Stege
- 52: freies Ende
- 54: Gehäuseunterteil
- 56: Gehäuseoberteil
- 58: Rastfeder
- 60: Rastnut
- 62: Positionieraussparung
- 64: Fenster
- 66: Spannwerkzeug
- 68: Griffstück
- 70: Zapfen
- 72: Gleitrampe

## Patentansprüche

1. Elektrische Heizvorrichtung, insbesondere als Zusatzheizung für Kraftfahrzeuge, mit einem offenen Gehäuse (2), in dem ein Schichtaufbau (4) mit wenigstens einem Radiatorelement (6), wenigstens einem wärmeabgebenden Element (8) mit wenigstens einem PTC-Heizelement (10) und wenigstens ein den Schichtaufbau (4) unter Vorspannung haltendes Federelement (20) mit daran ausgebildeten Federzungen (30) aufgenommen ist,
**gekennzeichnet durch**
ein Federgegenelement (22), welches benachbart und verschieblich zu dem Federelement (20) vorgesehen ist und für die Aufnahme der Federzungen (30) angepasst ausgebildete Aufnahmen (38) aufweist,
wobei das Federgegenelement (22) mit den Federzungen (30) derart zusammenwirkt, dass **durch** eine relative Verschiebung von Federelement (20) und Federgegenelement (22) das Federelement (20) gegenüber dem Federgegenelement (22) abgehoben und der Schichtaufbau (4) unter die Vorspannung des Federelementes (20) gesetzt wird.

2. Elektrische Heizvorrichtung nach Anspruch 1, **dadurch gekennzeichnet, dass** das Federgegenelement (22) eine die Ausnehmungen (42) ausformende Gitterstruktur aufweist und eine Vielzahl von Federzungen (30) in Längsrichtung hintereinander vorgesehen sind, die an zwischen den Ausnehmungen (42) vorgesehenen Stegen (50) des Federgegenelementes (22) abgestützt sind.

3. Elektrische Heizvorrichtung nach Anspruch 1 oder 2, **dadurch gekennzeichnet, dass** die Federzungen (30) durch Stanzen und Biegen als aus der Ebene eines Federblechs abragende Vorsprünge ausgebildet sind und dass ein durch Stanzen freigeschnittenes Ende der Federzunge (30) in einer ungespannten Montageausgangslage auf Höhe eines der Stege (50) vorgesehen ist.

4. Elektrische Heizvorrichtung nach einem der vorherigen Ansprüche, **dadurch gekennzeichnet, dass** ein Ende des Federelementes (20) durch Abtrennen eines Endlosmaterials des stanz- und biegebearbeiteten Federblechs an einer Stelle gebildet ist, an der die Federzunge (30) aus der Ebene des Federblechs hervorragt.

5. Elektrische Heizvorrichtung nach einem der vorherigen Ansprüche, **dadurch gekennzeichnet, dass** wenigstens eine Eingriffsöffnung (34) für ein Spannwerkzeug (66) an dem Federelement (20) vorgesehen ist und dass an dem Gehäuse (2) ein Fenster (64) zum Einbringen des Spannwerkzeuges (70) in die Eingriffsöffnung (34) ausgebildet ist.

6. Elektrische Heizvorrichtung nach einem der vorherigen Ansprüche, **dadurch gekennzeichnet, dass** das Federelement (20) zwischen einem Gehäuselängsholm (16) und dem Federgegenelement (22) vorgesehen ist.

7. Elektrische Heizvorrichtung nach einem der vorherigen Ansprüche, **dadurch gekennzeichnet, dass** das Federgegenelement (22) einen das Federelement (20) überragendes Positionssteg (48) aufweist und dass das Gehäuse (2) eine für die Aufnahme (38) des Positionssteges (48) angepasste Positionieraussparung (62) ausbildet, wobei der Positionssteg (48) und die Positionieraussparung (62) so ausgebildet sind, dass die Einheit aus Federelement (20) und Federgegenelement (22) nicht in jeder beliebigen Ausrichtung in das Gehäuse (2) eingebaut werden kann.

8. Elektrische Heizvorrichtung nach einem der vorherigen Ansprüche, **dadurch gekennzeichnet, dass** das Federgegenelement (22) wenigstens einen Auflageabschnitt (46) für das Federelement (20) ausbildet, auf dem das Federelement (20) gleitverschieblich ist und die Oberflächen der Stege (50) sich in einer mit Abstand zu der den Auflageabschnitt (46) aufnehmenden Ebene erstrecken.

9. Elektrische Heizvorrichtung nach einem der vorherigen Ansprüche, **dadurch gekennzeichnet, dass** zwischen den Aufnahmen (38) Ausnehmungen (42) vorgesehen sind, durch deren Zusammenwirken mit dem Federelement (20) eine Montageendlage, in der der Schichtaufbau (4) durch das Federelement (20) unter Federvorspannung gesetzt ist, gesichert ist.

10. Verfahren zur Herstellung einer elektrischen Heizvorrichtung, insbesondere als Zusatzheizung für Kraftfahrzeuge, mit einem ein Gehäuseunterteil (54) umfassenden offenen Gehäuse (2) und einem in dem Gehäuse (2) aufgenommenen Schichtaufbau (4) aus wenigstens einem wärmeabgebenden Element (8) mit wenigstens einem PTC-Heizelement (10) und einem Radiatorelement (6) sowie einem Federelement (20), wobei der Schichtaufbau (4) durch das Federelement (20) in dem Gehäuse (2) unter Vorspannung gehalten ist,
**gekennzeichnet durch** die Montageschritte:
Einsetzen des Schichtaufbaus (4) und des wenigstens einen Federelementes (20) in das Gehäuse (2), und
Verschieben des Federelementes (20) in einer Richtung im Wesentlichen parallel zu den Ebenen des Schichtaufbaus (4), wobei **durch** das Verschieben des Federelementes (20) der Schichtaufbau (4) in dem Gehäuse (2) verspannt wird.

11. Verfahren nach Anspruch 10, **dadurch gekennzeichnet, dass** beim Verschieben des Federelementes (20) eine an einer Federzunge (30) des Federelementes (20) ausgebildete Gleitrampe (72), die beim Einbau des Federelementes (20) in das Gehäuse (2) in einer Aufnahme (38) eines Federgegenelementes (22) aufgenommen ist, an einem Rand der Aufnahme (38) vorbei gleitet und hierbei das Federelement (20) vorgespannt wird.

## Claims

1. Electrical heating device, in particular as auxiliary heating for motor vehicles, with an open housing (2), in which a layer structure (4) comprising at least one radiator element (6) and at least one heat emitting element (8) with at least one PTC heating element (10) and in which at least one spring element (20) keeping the layer structure (4) under tension with spring tongues (30) formed on it are accommodated,
**characterised by**
a spring counter element (22), which is provided adjacent and movable with respect to the spring element (20) and exhibits receptacles (38) formed to match for the accommodation of the spring tongues (30),
wherein the spring counter element (22) interacts with the spring tongues (30) such that, through a relative displacement of the spring element (20) and spring counter element (22), the spring element (20) is raised with respect to the spring counter element (22) and the layer structure (4) is put under tension from the spring element (20).

2. Electrical heating device according to Claim 1, **characterised in that** the spring counter element (22) has a grid structure forming the recesses (42) and a plurality of spring tongues (30) are provided in the longitudinal direction one behind the other, which are supported on ridges (50) of the spring counter element (22) which are provided between the recesses (42).

3. Electrical heating device according to Claim 1 or 2, **characterised in that** the spring tongues (30) are formed by stamping and bending as protrusions protruding out of the plane of a spring metal sheet and that an end of the spring tongue (30), cut free by stamping, is provided in an unstressed initial assembly position at the height of one of the ridges (50).

4. Electrical heating device according to any of the preceding claims, **characterised in that** one end of the spring element (20) is formed by separation of an endless material of the spring metal sheet processed by stamping and bending at a point at which the spring tongue (30) protrudes out of the plane of the spring metal sheet.

5. Electrical heating device according to any of the preceding claims, **characterised in that** at least one engagement opening (34) for a clamping tool (66) is provided on the spring element (20) and that a window (64) is formed on the housing (2) for fitting the clamping tool (70) into the engagement opening (34).

6. Electrical heating device according to any of the preceding claims, **characterised in that** the spring element (20) is provided between a housing longitudinal spar (16) and the spring counter element (22).

7. Electrical heating device according to any of the preceding claims, **characterised in that** the spring counter element (22) has a positional ridge (48) surmounting the spring element (20) and that the housing (2) forms a positioning recess (62) matched for the receptacle (38) of the positional ridge (48), wherein the positional ridge (48) and the positioning recess (62) are formed such that the unit of spring element (20) and spring counter element (22) cannot be built into the housing (2) in any random orientation.

8. Electrical heating device according to any of the preceding claims, **characterised in that** the spring counter element (22) forms at least one deposition section (46) for the spring element (20) on which the spring element (20) can slide and the surfaces of the ridges (50) extend in a plane at a distance to the plane accommodating the deposition section (46).

9. Electrical heating device according to any of the preceding claims, **characterised in that** between the receptacles (38) recesses (42) are provided through the interaction of which with the spring element (20) an assembly end position, in which the layer structure (4) is put under spring tension by the spring element (20), is secured.

10. Method for producing an electrical heating device, in particular as auxiliary heating for motor vehicles, with an open housing (2) comprising a housing lower part (54) and, accommodated in the housing (2), a layer structure (4), which comprises at least one heat emitting element (8) with at least one PTC heating element (10) and a radiator element (6), and a spring element (20),
wherein the layer structure (4) is held under tension in the housing (2) by the spring element (20),
**characterised by** the assembly steps:
placement of the layer structure (4) and the at least one spring element (20) in the housing (2) and
displacement of the spring element (20) in a direction essentially parallel to the planes of the layer structure (4), wherein the layer structure (4) is clamped in the housing (2) by the displacement of the spring element (20).

11. Method according to Claim 10, **characterised in that** on displacing the spring element (20) a sliding slope (72), which is formed on a spring tongue (30) of the spring element (20) and which is accommodated in a receptacle (38) of a spring counter element (22) when the spring element (20) is fitted into the housing (2), slides past on an edge of the receptacle (38) and thus tensions the spring element (20).

## Revendications

1. Dispositif de chauffage électrique, en particulier sous la forme d'un dispositif de chauffage complémentaire pour véhicules automobiles, avec un boîtier ouvert (2) dans lequel sont logés une structure en couches (4) avec au moins un élément formant radiateur (6) et avec au moins un élément émetteur de chaleur (8) pourvu d'au moins un élément chauffant CPT (10), et au moins un élément élastique (20) qui maintient la structure en couches (4) contrainte et sur lequel sont formées des languettes élastiques (30),
**caractérisé par** un élément élastique opposé (22) qui est voisin de l'élément élastique (20) et mobile par rapport à celui-ci et qui comporte des logements (38) aptes à recevoir les languettes élastiques (30),
étant précisé que l'élément élastique opposé (22) coopère avec les languettes élastiques (30) de telle sorte qu'un déplacement relatif de l'élément élastique (20) et de l'élément élastique opposé (22) soulève ledit élément élastique (20) par rapport audit élément élastique opposé (22) et soumet la structure en couches (4) à la contrainte de l'élément élastique (20).

2. Dispositif de chauffage électrique selon la revendication 1, **caractérisé en ce que** l'élément élastique opposé (22) présente une structure de grille qui forme les creux (42), et il est prévu une multiplicité de languettes élastiques (30) disposées les unes derrière les autres dans le sens longitudinal, qui s'appuient contre des nervures (50) de l'élément élastique opposé (22) prévues entre les creux (42).

3. Dispositif de chauffage électrique selon la revendication 1 ou 2, **caractérisé en ce que** les languettes élastiques (30) sont formées par découpage et pliage comme des saillies qui dépassent du plan d'une tôle élastique, et **en ce qu'**une extrémité de la languette élastique (30) dégagée par découpage est prévue, dans une position de montage initiale non contrainte, à la hauteur de l'une des nervures (50).

4. Dispositif de chauffage électrique selon l'une des revendications précédentes, **caractérisé en ce qu'**une extrémité de l'élément élastique (20) est formée par séparation d'un matériau sans fin de la tôle élastique transformée par découpage et pliage à un endroit où la languette élastique (30) dépasse du plan de la tôle élastique.

5. Dispositif de chauffage électrique selon l'une des revendications précédentes, **caractérisé en ce qu'**il est prévu au moins une ouverture d'accès (34) pour un outil de serrage (66) sur l'élément élastique (20), et **en ce qu'**une fenêtre (64) est formée sur le boîtier (2), pour introduire l'outil de serrage (70) dans l'ouverture d'accès (34).

6. Dispositif de chauffage électrique selon l'une des revendications précédentes, **caractérisé en ce que** l'élément élastique (20) est prévu entre un élément longitudinal de boîtier (16) et l'élément élastique opposé (22).

7. Dispositif de chauffage électrique selon l'une des revendications précédentes, **caractérisé en ce que** l'élément élastique opposé (22) comporte une nervure de position (48) qui dépasse de l'élément élastique (20), et **en ce que** le boîtier (2) forme un évidement de positionnement (62) adapté au logement (38) de la nervure de position (48), ladite nervure de position (48) et l'évidement de positionnement (62) étant conçus pour que l'unité formée de l'élément élastique (20) et de l'élément élastique opposé (22) ne puisse pas être montée dans le boîtier (2) dans n'importe quelle orientation.

8. Dispositif de chauffage électrique selon l'une des revendications précédentes, **caractérisé en ce que** l'élément élastique opposé (22) forme au moins une section d'appui (46) pour l'élément élastique (20), sur laquelle celui-ci est apte à coulisser, et les surfaces des nervures (50) s'étendent dans un plan espacé du plan qui reçoit la section d'appui (46).

9. Dispositif de chauffage électrique selon l'une des revendications précédentes, **caractérisé en ce qu'**il est prévu entre les logements (38) des creux (42) dont la coopération avec l'élément élastique (20) garantit une position de montage finale dans laquelle la structure en couches (4) est soumise par l'élément élastique (20) à une contrainte élastique.

10. Procédé pour fabriquer un dispositif de chauffage électrique, en particulier sous la forme d'un dispositif de chauffage complémentaire pour véhicules automobiles, avec un boîtier ouvert (2) qui comprend une partie inférieure (54), et une structure en couches (4) qui est logée dans le boîtier (2) et qui se compose d'un élément émetteur de chaleur (8) pourvu d'au moins un élément chauffant CPT (10), et d'au moins un élément formant radiateur (6), ainsi qu'un élément élastique (20), la structure en couches (4) étant maintenue contrainte par ledit élément élastique (20) dans le boîtier (2),
**caractérisé par** les étapes de montage suivantes :
introduction de la structure en couches (4) et de l'élément ou des éléments élastiques (20) dans le boîtier (2), et
coulissement de l'élément élastique (20) dans un sens globalement parallèle aux plans de la structure en couches (4), étant précisé que grâce au coulissement de l'élément élastique (20), la structure en couches (4) est calée dans le boîtier (2).

11. Procédé selon la revendication 10, **caractérisé en ce que** lors du coulissement de l'élément élastique (20), une rampe de coulissement (72) qui est formée sur une languette élastique (30) de l'élément élastique (20) et qui, lors du montage de l'élément élastique (20) dans le boîtier (2), est logée dans un logement (38) d'un élément élastique opposé (22) passe devant un bord dudit logement (38), moyennant quoi l'élément élastique (20) est contraint.
